# EUROPEAN PATENT SPECIFICATION

(11) **EP 0 553 592 B1**
(45) Date of publication and mention of the grant of the patent: **16.10.1996**
(21) Application number: 92810061.9
(22) Date of filing: 28.01.1992
(51) Int. Cl.: B23K 35/32, B23K 35/02, C23C 24/10

(54) **Improved metal-coated articles and method of manufacture**
Gegenstand mit verbesserter Metallschicht und Verfahren zu seiner Herstellung
Pièce revêtue d'une couche métallique améliorée et procédé de fabrication

(43) Date of publication of application: 04.08.1993
(73) Proprietor: THE PULLMAN COMPANY, Livingston, N.J. 07039 (US)
(72) Inventor: Solanki, Mukesh M., New Albany, Indiana (US); Handzel, John M., Salem, Indiana 47167 (US); Sumner, Malvin G., Salem, Indiana 47167 (US); Harley, Christopher B., New Albany, Indiana (US)
(74) Representative: Lauer, Joachim, Dr.

(56) References cited:
- DE-A- 2 115 358
- GB-A- 2 240 504
- US-A- 3 876 447
- US-A- 3 916 506
- US-A- 4 194 040

## Description

The present invention relates to an improved metal coated article and method of manufacture, and more particularly to an improved wear/corrosion resistant coated article with a large and/or complex shape to be coated and method of manufacture.

### Background of the Invention

It is sometimes advantageous to coat a substrate, especially a metal, with a coating having special properties, for example, wear resistance or corrosion resistance. Wear resistance can be provided for a substrate by coating it with a coating composed of a mixture of hard abrasive material such as powdered tungsten carbide or the like, dispersed in a hard filler metal. Corrosion resistance can be provided to a substrate with a similar coating composed of a corrosion resistant metal or alloy. Other special or improved physical properties can be obtained in a similar manner substituting other matrix materials.

Prior to the work of Breton et al. (U.S. Patent Nos. 3,743,556, 3,196,506, and 4,194,040) it was difficult to produce such a coating, especially an object having an intricate or complicated shape or requiring a coating thickness of greater than .020 of an inch. In the prior methods using plasma and flame spraying techniques, it was difficult to get uniform coatings on a substrate, especially a substrate having an intricate surface. A similar difficulty occurred in the prior method using techniques such as abrasive particle dusting onto the substrate.

Breton et al eliminated many of the difficulties that existed in the prior art methods by providing a method using a first layer of a desired thickness of a high melting point powdered matrix material in an organic binder material and a second layer of a lower melting temperature powdered brazing filler material also in an organic binder. The first layer is then placed on the substrate with the second layer in turn placed on top of it. The matrix material is characterized as being wetted by the brazing filler metal or alloy in the molten state. This assembly is then heated to decompose the binder and melt the filler metal or alloy which is infused by capillary action into the matrix layer. Cooling then yields an essentially void-free coating bonded on the substrate. The method for preparing both the hard particle matrix material as well as the braze filler alloy layers or preforms, using fibrillated polytetra fluoroethylene (PTFE) is disclosed in U.S. patents 3,916,506 and 4,194,040. One of the big factors in determining ultimate physical properties by Breton et al method (wear resistance and/or corrosion resistance characteristics) of the coating is the amount of matrix particle packing (density of matrix particles in the coating). This matrix particle loading in the preform and the final coating layer is dependent in general on three material property factors: particle size, size distribution and shape. This has been found to be a limiting factor to this method. There has been a desire to try to increase this particle loading but the inherent properties of the powder material (particle size, size distribution and shape) and processing constraints have limited the success especially with articles in which the finish coating layer is in excess of 0.030 of an inch.

Another factor in determining ultimate physical properties is to ensure that the matrix particle loading in the preform and in turn the final coating layer is as uniform as possible with no areas where there is significantly reduced loading. This factor becomes significantly important where more than one matrix sheet or preform is needed to coat the surface of a substrate due to the large and/or complex shape of the surface area to be coated. In these applications there are seam or seams where the two separate portions of the matrix sheet abut and thus a gap even when the loaded matrix preform sheets are placed together side by side as closely as possible on the substrate surface. This gap or void often enlarges during heating and melting of the brazing filler to create the final coating on the substrate which results in almost no matrix material residing in that area or in the worst case producing actual voids in the coating. In both these cases, the integrity of the article and its ability to withstand wear/corrosion is then greatly reduced.

### Summary of Invention

One method of increasing the desired properties and maximizing the wear and/or corrosion resistance of the coating is to ensure there is adequate matrix particle loading in all areas of the coating even in any seam areas. It has been found that this desired aim can be accomplished by the use of multi-layer flexible matrix sheets placed one on top of another to make the component parts and in turn, the whole matrix layer and then positioning the layers of sheets such that any seams present in one of the sheet layers are staggered with respect to seams in other sheet layers. That is, no seams extend from the surface of the coating to the surface of the substrate. The advantage of this novel arrangement is to ensure that there is significant matrix particle loading in all areas of the coating on the substrate. This use of multi-layer flexible matrix sheets for the coating also allows for desired high densities of matrix particles described in co-pending application serial number 07/475,745 filed February 6, 1990 (see also GB-A- 2 240 504) and assigned to the owner of the present invention, the specification and claims of which are incorporated herein by reference.

In accordance with one aspect of this invention as defined in claim 1, there is provided a composite article produced by brazing cloth-like flexible metallic coating members containing matrix particles in a PTFE carrier material to a surface of a metal substrate, the improvement comprising brazing a plurality of cloth-like flexible metallic coating layers, said layers being positioned in a stack one on top of another with no seams being vertically aligned.

In accordance with another aspect of this invention, The composite article of claim 1 wherein said matrix particles are selected from the group consisting of tungsten carbide, titanium carbide, nickel boride and chromium carbide.

In accordance with yet another aspect of this invention, the composite article of claim 1 wherein said metallic layers are of the same general thickness.

In accordance with still another aspect of this invention, the composite article of claim 1 wherein any of said plurality of metallic layers vary from 20% to 85% of total coating thickness.

In accordance with another aspect of the present invention as defined in claim 5 there is provided a method for producing a composite article by brazing more than one cloth-like flexible metallic coating material member on a metallic substrate for providing the desired surface coating of a predetermined thickness to the metallic substrate, wherein said desired metallic coating members are made from a matrix powder blended with PTFE and mechanically worked to fibrillate the PTFE and trap the matrix particles, the improvement comprising of working said metallic coating material members by rolling operation so as to reduce the thickness from about 20% to about 85% of the original predetermined thickness of the final desired surface coating, cutting said reduced thickness coating members into a series of preforms having a desired predetermined configuration, positioning a plurality of said preforms one on top of another onto the surface of the metallic substrate so as to create said coating material members on the substrate such that seams formed by abutting preforms in at least any two preform layers are displaced one from another, said plurality of preform layers having a total thickness generally equal to the predetermined thickness of the desired coating, providing a sheet of brazing material of a desired predetermined configuration placed on top of said preform layers and heating the substrate, preforms and brasing material to provide a metallurgical bonding of the preform layers to the metallic substrate thereby yielding the composite article with special properties with adequate matrix powder throughout.

In accordance with another aspect of the present invention there is provided a method of claim 5 wherein said preform layers position one on top of another with any seam in any preform layer displaced from a seam in any other layer.

In accordance with yet another aspect of this invention there is provided a method of claim 6 wherein said preform layers are of the same general thickness.

In accordance with still another aspect of the present invention there is provided a method of claim 7 wherein said matrix particles are selected from the group consisting of tungsten carbide, titanium carbide, nickel boride and chromium carbide.

In accordance with another aspect of this invention there is provided a method of claim 6 wherein said total surface coating made from the plurality of preforms is applied by more than one heat brazing operation.

In accordance with yet another aspect of the present invention as defined in claim 10 there is provided an improved composite article of the type produced by (a) placing on a metal substrate a first cloth-like layer which includes a particulate brazing metal or alloy in a cloth-like layer which includes a particulate wear- or corrosion-resistant metal compound binder, the liquidus temperature of the metal or alloy in the first layer being lower than the liquidus temperature of the substrate and of the metal in the second layer, the metal or alloy in the first layer when molten wetting the metal compound of the second layer, (b) heating the assembly to the liquidus temperature of the brazing metal or alloy to decompose the binders and to infuse the molten brazing metal or alloy into the metal compound, and (c) cooling the assembly to produce a brazing metal- or alloy-filled coating of the wear- or corrosion-resistant metal compound on the substrate; wherein the improvement comprises replacing the second layer with a plurality of sublayers each having one or more coplaner sheets therein, each of such sheets including the powdered wear- or corrosion-resistant metal compound in the binder; seams defined between adjacent sheets in any sublayer being offset from, and not coincident with, seams defined between adjacent sheets in any other sublayer.

In accordance with another aspect of the present invention there is provided a composite article as in claim 10, wherein the total thickness of the sublayers is substantially compound equal to the thickness of the replaced second layer.

In accordance with still another aspect of this invention there is provided a composite article set forth in claim 10, wherein the wear- or corrosion-resistant metal compound is selected from the group consisting of tungsten carbide, titanium carbide, nickel boride and chromium carbide. One benefit obtained by the present invention is to provide a composite article with greatly improved physical properties in its coating layer.
Another benefit obtained by the present invention is to provide a composite article with a coating layer having more uniform wear resistance properties in the entire coating layer.
It is an object of this invention to provide an improved coating.
It is another object of the present invention to provide a hard facing coating having improved uniform wear resistance throughout the coating.
Further features and advantages of the invention will readily be apparent from the specification of the drawings.

### Brief Description of the Drawing

Figure 1 illustrates a composite article made according to the prior art; and
Figure 2 illustrates a composite article made according to the present invention.
Figure 3 illustrates a finished composite article in accordance with the present invention.

### Detailed Description of the Invention

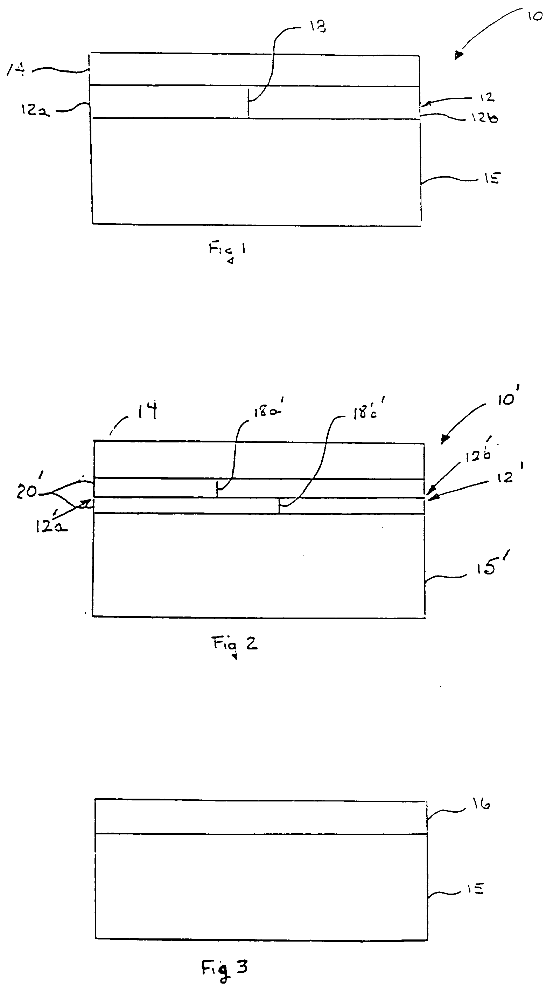

Referring now to the drawing wherein the showings are for purposes of illustrating the prior art and preferred embodiments of the invention only and not for the purpose of limiting same. Figure 1 shows a composite article 10 of the prior art in which a matrix metal layer 12 and a braze filler metal layer 14 are heated as fully described in U.S. Patent 3,743,556 to provide a desired surface coating 16 (See Figure 3) on a substrate 15. In accordance with this invention matrix metal layer 12 has two portions 12a and 12b with a seam 18 where the two ends of the layer meet. The matrix layer portions are typically of the same thickness resting on the surface area of the coating. It is to be understood that matrix metal layer 12 can have more than the two portions as illustrated in the Figures. The reason for needing more than one matrix layer portion is typically due to the large and/or complex shape of the surface area of the substrate to be coated.

Briefly, in the prior art, the coating is achieved on the substrate surface by first laying a matrix metal layer or preform (matrix powder material in fibrillated PTFE) made of component portions on the substrate and then a braze filler alloy layer or preform (braze filler material in fibrillated PTFE) is placed on top of the matrix particle preform and both are heated. The weight, thickness and configuration of this braze preform is matched to the relative density of the matrix preform to yield a full dense coating layer of the same general thickness as that of the original matrix metal layer. An adhesive can be used, if desired, to initially hold this assembly together. The heat brazing is typically done in a controlled atmosphere or in a vacuum at a temperature above the liquids temperature of the braze filler but below that of the matrix particle layer. At such temperature molten braze infiltrates through the matrix particle preform and fills the voids and subsequently bonds to the substrate by diffusion effect yielding a coating layer essentially the same thickness as initial matrix metal layer.

Typically, during this heating/brazing operation the seam area 18 caused by needing to make the final coating with more than one initial matrix metal layer portion either is filled with a large percentage of brazing material and thus little or no matrix material and/or with voids. This then results in a coating With less overall reliability and desired wear/corrosion properties ultimately leading to potential premature failure of the article.

Figure 2 shows a composite article 10' of the present invention in which matrix powder material layer 12' has two portions, 12a' and 12b' each comprised of two or more sheets or preform layers 20'. The sheets 20' are typically made of hard particle material such as tungsten carbide, titanium carbide, nickel boride, chromium carbide or the like entrapped in an organic binder of fibrillated PTFE. The two or more sheets 20' generally are of equal thickness in total equaling the thickness of layer 12' and ultimately the final coating thickness. Although in special applications, the individual sheets could vary from 20% to 85% of the overall final coating thickness. That is, sheets 20' of different thickness can readily be used having a total thickness equal to that of final desired coating layer, but it is preferable to have the alignment of the sheets in the portions 12a', 12b' be similar to provide for staggering of seams in the sheet layers as will be more fully explained below.

In accordance with this invention, the sheets which make up layer 12' are reduced in thickness typically from about 20% to about 85% from that of layer 12' thus increasing solids density typically 10% or more. This 10% increase in solids density has produced increased desired properties (wear resistance as high as 50% or more.

Further in accordance with this invention, the sheets 20' which make up portions 12a' and 12b' and in turn layer 12' are cut and positioned one on top of another on substrate 15' such a seam 18' formed where the end portion of any layer level of 12a' abuts the end portion of corresponding layer level of 12b' are staggered or displaced one from another. That is, the alignment of the sheets is varied so that the abutment of different levels of the sheets appear at different locations so that there are no areas where the sheets 20' contain a continuous seam area from the surface portion of assembled sheets 20' to the surface of substrate 15'. As shown in Figure 2, seam 18a' and 18b' are displaced or staggered one from another thereby not providing a continuous seam area from the surface of the multi-layered matrix sheet to the surface of the substrate as would be the case if the sheets or preforms were of the same size aligned one on top of another on the substrate. To maximize the benefit of the present invention, all seams in any level should be displaced from seams in any other level.

The present invention is described in greater detail with reference to the following examples contrasting the prior art and preferred practices of the invention.

### Example I

Tungsten carbide matrix powder (40% by volume 2 to 5 micron size particles and 60% by volume -325 mesh size particles) was mixed with 6% by volume of Teflon (PTFE). This mixture was mechanically worked to fibrillate the PTFE and trap the tungsten carbide particles thus making a cloth-like sheet as more fully described in U.S. Patent Nos. 3,864,124 and 4,194,040. The sheet was rolled to a 0.060 of an inch thickness.

A braze alloy powder (with the composition of 81.5% nickel, 15% chromium and 3.5% boron by weight) was mixed with 6% by volume of PTFE to form a cloth-like sheet similar to that of Tungsten carbide sheet set forth above with a weight density and thickness matched so as to fill voids in tungsten carbide sheet. The test sample to be hardfaced was of low carbon steel (18" x 18" x .250"). Two carbide preforms of the size of 18" x 9" were applied side by side on the test sample surface. On top of the carbide preforms the braze alloy preform(s) of appropriate size were placed as shown in Figure 1. The preforms were temporarily held in position by means of adhesive. The assembled test sample was heated in a vacuum furnace to 2085°F for 30 minutes. The braze material melted and infiltrated the carbide preform and upon cooling the article provided a tungsten carbide coating of approximately 0.060 of an inch on the steel substrate as in U.S. Patent No. 3,743,566. Upon visual examination of the coating, it was noticed that there was separation in the seam area formed at the interface of the preforms. More careful examination under magnification revealed that there was void areas and areas of virtually no matrix tungsten carbide powder from the surface of the coating to the surface of the substrate.

### Example II

The tungsten carbide sheet referred to in Example I of a thickness of 0.60 of an inch was further reduced to 0.030 of an inch by following a series of decrement rolling steps. The solids density of the sheet was found to have risen from approximately 52% to 60%. The same size test plate (18" x 18" x .250") was hard faced by laying two tungsten carbide preforms (18" x 9" each) side by side as a first sheet layer and then a second sheet layer was placed on the first, only this time the tungsten carbide preforms were 18" x 8" and 18" x 10" in size. This produced a total tungsten carbide layer of 0.060 of an inch in which the seam of the second layer was staggered from the seam of the first layer by a distance of one inch. The braze alloy preform of Example I was then applied on top of the tungsten carbide to provide the composite generally as shown in Figure 2. The brazing conditions were the same as described in Example I. Upon visual examination of the coating, it was noticed that there was no area separation in the seam area that extended from the surface of the coating to the surface of the test plate. A further examination under magnification revealed that there were no large void areas or areas of no matrix tungsten carbide powder from the surface of the coating to the surface of the substrate.

### Example III

The coating materials and procedure similar to that of Example I was repeated for a cylindrical steel test sample six inches in diameter and six inches in length. More specifically, a 0.060 of an inch thick tungsten carbide preform was glued to the inside surface of the cylindrical as the cylinder was stood on end with a seam running the entire length. Then the brazed alloy preform was glued on top of the carbide preform and the test sample was heat brazed under the conditions described in Example I and upon cooling a hardfaced coating was formed on the internal surface diameter of the part. The resulting hardface coating upon metallography studies indicated that at certain locations of seam areas wide unfilled openings were present and at other locations the areas were filled by braze alloy with little or no presence of matrix tungsten carbide particles.

### Example IV

A coating similar to that described in Example III was produced using multi-layered carbide preforms and the staggering of seam areas. More specifically, the cylindrical steel sample while standing on its end was hardface coated by first applying two 0.030 of an inch thick preform sheets of tungsten carbide over the inner surface with the top sheet having its end portions abut approximately 1/2 of an inch displaced from where the end portions of the lower sheet met. Appropriate match of the braze alloy preform was applied on the carbide layers and the test sample was processed in the furnace as in the other examples. After brazing operation and cooling, metallography studies indicated that no exposure of substrate surface was revealed at any location of the seams and that there was significant matrix particle loading in all areas of the coating.

### Example V

A cylindrical steel test sample as described in Examples III and IV was coated using multi-layered carbide preforms and then staggering of seam areas. This example varies from Example IV in that the cylindrical steel test sample is coated while laying down which requires a dual brazing process. More specifically, the cylindrical steel sample was hardface coated by first applying two 0.030 of an inch thick preform sheets of tungsten carbide over half of the inner surface with the top sheet approximately 1/2 of an inch shorter at both ends. Appropriate match of the braze alloy preform was applied on the carbide layers and the test sample was processed in the furnace as in the other examples. Similarly, the second half surface was hardface coated by the carbide and braze preforms in the same manner as for the first half portion except this time the top sheet preform is approximately 1/2 of an inch longer at both ends. After brazing operation and cooling, metallography studies indicated that no exposure of the substrate was found at any location of the seams and that there was significant matrix particle leading in all areas of the coating.

Thus, comparing the results of the final coating, in the examples, the prior art (Examples I and III) revealed distinct problems in the seam areas of the coating whereas the coating made as set forth in the present invention (Examples II, IV and V) had much more uniform matrix particle loading and less void problems. This fact allows for greatly enhanced productive life of the article as well as the fact of increased solids density of the preform by using multi-layer sheets.

The novel method of the present invention relates to a process for providing a desired matrix surface coating to a large or complex shaped metallic substrate surface requiring more than one coating member wherein a matrix powder is blended with PTFE and mechanically worked to fibrillate the PTFE and trap the matrix surface particles, the improvement comprising of working said metallic coating material members by rolling operation so as to reduce from about 20% to about 85% of the original predetermined thickness of the final desired surface coating, cutting said reduced thickness coating members into a series of preforms having a desired predetermined configuration, positioning a plurality of said preforms one on top of another onto the surface of the metallic substrate so as to create said coating material members on the substrate such that seams formed by abutting preforms in at least any two preform layers are displaced one from another, said plurality of preform layers having a total thickness generally equal to the predetermined thickness of the desired coating providing a sheet of brazing material of a desired predetermined configuration placed on top of said preform layers and heating the substrate preforms and brazing material to provide a metallurgical bonding of the preform layers to the metallic substrate thereby yielding the composite article with special properties with adequate matrix powder throughout.

In special applications, the process described above may need to be done in two parts requiring two distinct operations of placing the preforms and braze material and then heating it. That is, only one portion of the surface can be coated at one time due to geometry or other process restraints (See Example V).

While the article in the drawings has been illustrated as having a bar shape, they may also as noted by round shaped or they may have square, oval, elongated or any other suitable shape especially those having a non-linear configuration.

The patents, patent application and foreign patent publications set forth in the specification are intended to be incorporated by reference herein.

It is apparent that there has been provided in accordance with this invention a process and product which fully satisfy the objects, means and advantages set forth hereinbefore. While the invention has been described in combination with the specific embodiments thereof, it is evidence that many alternatives, modifications, and variations will be apparent to those skilled in the art in light of the foregoing description.

## Claims

1. A composite article produced by brazing cloth-like flexible metallic coating members containing matrix particles in a PTFE carrier material to a surface of a metal substrate, comprising:
brazing a plurality of cloth-like flexible metallic coating layers, said layers being positioned in a stack one on top of another with no seams being vertically aligned.

2. The composite article of claim 1 wherein said matrix particles are selected from the group consisting of tungsten carbide, titanium carbide, nickel boride and chromium carbide.

3. The composite article of claim 1 wherein said metallic layers are of the same general thickness.

4. The composite article of claim 1 wherein any of said plurality of metallic layers vary from 20% to 85% of total coating thickness.

5. A method for producing a composite article by brazing more than one cloth-like flexible metallic coating material member on a metallic substrate for providing the desired surface coating of a predetermined thickness to the metallic substrate, wherein said desired metallic coating members are made from a matrix powder blended with PTFE and mechanically worked to fibrillate the PTFE and trap the matrix particles, comprising working said metallic coating material members by rolling operation so as to reduce the thickness from about 20% to about 85% of the original predetermined thickness of the final desired surface coating, cutting said reduced thickness coating members into a series of preforms having a desired predetermined configuration, positioning a plurality of said preforms one on top of another onto the surface of the metallic substrate so as to create said coating material members on the substrate such that seams formed by abutting preforms in at least any two preform layers are displaced one from another, said plurality of preform layers having a total thickness generally equal to the predetermined thickness of the desired coating, providing a sheet of brazing material of a desired predetermined configuration placed on top of said preform layers and heating the substrate, preforms and brazing material to provide a metallurgical bonding of the preform layers to the metallic substrate thereby yielding the composite article with special properties with adequate matrix powder throughout.

6. The method of claim 5 wherein said preform layers position one on top of another with any seam in any preform layer displaced from a seam in any other layer.

7. The method of claim 6 wherein said preform layers are of the same general thickness.

8. The method of claim 7 wherein said matrix particles are selected from the group consisting of tungsten carbide, titanium carbide, nickel boride and chromium carbide.

9. The method of claim 6 wherein said total surface coating made from the plurality of preforms is applied by more than one heat brazing operation.

10. A composite article produced by (a) placing on a metal substrate a first cloth-like layer which includes a particulate brazing metal or alloy in a cloth-like layer which includes a particulate wear- or corrosion-resistant metal compound binder, the liquidus temperature of the metal or alloy in the first layer being lower than the liquidus temperature of the substrate and of the metal in the second layer, the metal or alloy in the first layer when molten wetting the metal compound of the second layer, (b) heating the assembly to the liquidus temperature of the brazing metal or alloy to decompose the binders and to infuse the molten brazing metal or alloy into the metal compound, and (c) cooling the assembly to produce a brazing metal- or alloy-filled coating of the wear- or corrosion-resistant metal compound on the substrate; wherein
the second layer is replaced by a plurality of sublayers each having one or more coplaner sheets therein, each of such sheets including the powdered wear- or corrosion-resistant metal compound in the binder; seams defined between adjacent sheets in any sublayer being offset from, and not coincident with, seams defined between adjacent sheets in any other sublayer.

11. A composite article as in claim 10, wherein:
the total thickness of the sublayers is substantially compound equal to the thickness of the replaced second layer.

12. The composite article set forth in claim 10, wherein:
the wear- or corrosion-resistant metal compound is selected from the group consisting of tungsten carbide, titanium carbide, nickel boride and chromium carbide.

## Patentansprüche

1. Verbundkörper, hergestellt durch Auflöten von tuchartigen, flexiblen, metallischen Beschichtungselementen, die Matrixteilchen in einem PTFE-Trägermaterial enthalten, auf eine Oberfläche eines Metallsubstrats, wobei man mehrere tuchartige, flexible metallische Überzugsschichten auflötet, die ohne vertikal aufeinander ausgerichtete Fugen übereinandergestapelt sind.

2. Verbundkörper nach Anspruch 1, wobei die Matrixteilchen aus der Gruppe, bestehend aus Wolframcarbid, Titancarbid, Nickelborid und Chromcarbid, ausgewählt sind.

3. Verbundkörper nach Anspruch 1, wobei die metallischen Schichten etwa gleich dick sind.

4. Verbundkörper nach Anspruch 1, wobei jede der mehreren metallischen Schichten 20 bis 85% der Gesamtdicke des Überzugs ausmacht.

5. Verfahren zur Herstellung eines Verbundkörpers durch Auflöten von mehr als einem tuchartigen, flexiblen, metallischen Beschichtungsmaterialelement auf ein metallisches Substrat, wodurch man das metallische Substrat mit der gewünschten Oberflächenbeschichtung mit einer vorbestimmten Dicke versieht, wobei die gewünschten metallischen Beschichtungselemente aus einem mit PTFE vermischten Matrixpulver, das zur Fibrillierung und zum Einschließen der Matrixteilchen mechanisch bearbeitet worden ist, bestehen, bei dem man die metallischen Beschichtungsmaterialelemente auf etwa 20% bis etwa 85% der ursprünglichen vorbestimmten Dicke der gewünschten fertigen Oberflächenbeschichtung auswalzt, dann zu einer Reihe von Vorformen einer gewünschten vorbestimmten Form zuschneidet, mehrere dieser Vorformen übereinander auf die Oberfläche des metallischen Substrats legt und so die Beschichtungsmaterialelemente auf dem Substrat derart bildet, daß von aneinanderstoßenden Vorformen gebildete Fugen in mindestens zwei beliebigen Vorformschichten gegeneinander versetzt sind, wobei die Gesamtdicke der mehreren Vorformschichten etwa der vorbestimmten Dicke des gewünschten Überzugs entspricht, auf die Vorformschichten eine Lotfolie einer gewünschten vorbestimmten Form aufbringt und das Substrat, die Vorformen und das Lot erhitzt und so die Vorformschichten metallurgisch an das metallische Substrat bindet, wodurch man den Verbundkörper mit besonderen Eigenschaften und durchgehend genügend Matrixpulver erhält.

6. Verfahren nach Anspruch 5, bei dem man die Vorformschichten so aufeinanderlegt, daß jede Fuge in jeder Vorformschicht gegen eine Fuge in einer beliebigen anderen Schicht versetzt ist.

7. Verfahren nach Anspruch 6, bei dem die Vorformschichten etwa gleich dick sind.

8. Verfahren nach Anspruch 7, bei dem man die Matrixteilchen aus der Gruppe, bestehend aus Wolframcarbid, Titancarbid, Nickelborid und Chromcarbid, auswählt.

9. Verfahren nach Anspruch 6, bei dem man die gesamte Oberflächenschicht aus mehreren Vorformen in mehr als einem Heißlötarbeitsgang aufbringt.

10. Verbundkörper, hergestellt, indem man (a) eine erste tuchartige Schicht, die in einer tuchartigen Schicht, die ein Bindemittel für eine teilchenförmige, verschleißfeste oder korrosionsbeständige Metallverbindung enthält, ein teilchenförmiges Lötmetall bzw. eine teilchenförmige Lötlegierung enthält, auf ein Metallsubstrat aufbringt, wobei die Liquidustemperatur des Metalls bzw. der Legierung in der ersten Schicht unter der Liquidustemperatur des Substrats und unter der des Metalls in der zweiten Schicht liegt und das Metall bzw. die Legierung in der ersten Schicht in geschmolzenem Zustand die Metallverbindung der zweiten Schicht benetzt, (b) die Anordnung zur Zersetzung der Bindemittel und zum Einfließen des geschmolzenen Lötmetalls bzw. der geschmolzenen Lötlegierung in die Metallverbindung auf die Liquidustemperatur des Lötmetalls bzw. der Lötlegierung erhitzt und (c) die Anordnung zur Erzeugung eines mit Lötmetall bzw. Lötlegierung gefüllten Überzugs aus der verschleißfesten oder korrosionsbeständigen Metallverbindung auf dem Substrat abkühlt, wobei man die zweite Schicht durch mehrere Teilschichten mit jeweils einem oder mehreren koplanaren Flächengebilden ersetzt, wobei jedes dieser Flächengebilde die pulverförmige, verschleißfeste oder korrosionsbeständige Metallverbindung in dem Bindemittel enthält, und die Fugen zwischen benachbarten Flächengebilden in jeder Teilschicht gegen Fugen zwischen benachbarten Flächengebilden in einer anderen Teilschicht versetzt sind und nicht damit zusammenfallen.

11. Verbundkörper nach Anspruch 10, wobei:
die Gesamtdicke der Teilschichten im wesentlichen der Dicke der ersetzten zweiten Schicht entspricht.

12. Verbundkörper nach Anspruch 10, wobei:
die verschleißfeste oder korrosionsbeständige Metallverbindung aus der Gruppe, bestehend aus Wolframcarbid, Titancarbid, Nickelborid und Chromcarbid, ausgewählt ist.

## Revendications

1. Article composite produit par brasage d'éléments de revêtement métalliques souples, analogues à du tissu, contenant des particules de matrice dans un matériau de support en PTFE, sur la surface d'un substrat métallique, comprenant:
le brasage d'une pluralité de couches de revêtement métallique souples, analogues à du tissu, lesdites couches étant empilées les unes sur les autres sans qu'aucun des joints soient alignés verticalement.

2. Article composite selon la revendication 1, dans lequel lesdites particules de matrice sont choisies dans le groupe constitué par le carbure de tungstène, le carbure de titane, le borure de nickel et le carbure de chrome.

3. Article composite selon la revendication 1, dans lequel lesdites couches métalliques ont la même épaisseur globale.

4. Article composite selon la revendication 1, dans lequel l'une quelconque de ladite pluralité de couches métalliques peut varier de 20% à 85% de l'épaisseur totale du revêtement.

5. Procédé de production d'un article composite par brasage de plus d'un élément de matériau de revêtement métallique souple, analogue à du tissu, sur un substrat métallique, pour fournir le revêtement superficiel voulu d'épaisseur prédéterminée sur le substrat métallique, dans lequel lesdits éléments de revêtement métallique voulus sont faits à partir d'une poudre de matrice mélangée à du PTFE et soumise à un travail mécanique servant à fibriller le PTFE et à piéger les particules de matrice, comprenant les étapes consistant à travailler lesdits éléments de matériau de revêtement métallique par une opération de laminage, de manière à réduire l'épaisseur d'environ 20% à environ 85% de l'épaisseur prédéterminée initiale du revêtement superficiel voulu final, découper lesdits éléments de revêtement d'épaisseur réduite en une série de préformes ayant une configuration prédéterminée voulue, positionner une pluralité desdites préformes les unes sur les autres sur la surface du substrat métallique, de manière à créer lesdits éléments de matériau de revêtement sur le substrat pour que les joints formés par la mise bout à bout des préformes dans au moins deux couches de préforme quelconques soient décalés les uns des autres, ladite pluralité de couches de préforme ayant une épaisseur totale globalement égale à l'épaisseur prédéterminée du revêtement voulu, fournir une feuille de matériau de brasage de configuration prédéterminée voulue placée sur le dessus desdites couches de préforme et chauffer le substrat, les préformes et le matériau de brasage pour fournir une liaison métallurgique des couches de préforme au substrat métallique, afin d'obtenir l'article composite ayant des propriétés spéciales, avec la poudre de matrice adéquate dans tout l'article.

6. Procédé selon la revendication 5, dans lequel lesdites couches de préforme sont placées les unes sur les autres de manière qu'un joint quelconque d'une couche de préforme quelconque soit décalé d'un joint quelconque d'une autre couche quelconque.

7. Procédé selon la revendication 6, dans lequel lesdites couches de préforme ont la même épaisseur globale.

8. Procédé selon la revendication 7, dans lequel lesdites particules de matrice sont choisies dans le groupe constitué par le carbure de tungstène, le carbure de titane, le borure de nickel et le carbure de chrome.

9. Procédé selon la revendication 6, dans lequel le revêtement de la surface totale, fait à partir d'une pluralité de préformes, est appliqué par plus d'une opération de brasage thermique.

10. Article composite produit par les étapes consistant à (a) placer, sur un substrat métallique, une première couche analogue à du tissu renfermant un métal ou un alliage de brasage particulaire dans une couche analogue à un tissu qui comprend un liant particulaire à base de composé métallique résistant à l'usure ou à la corrosion, la température du liquidus du métal ou de l'alliage de la première couche étant inférieure à la température du liquidus du substrat et du métal de la seconde couche, le métal ou l'alliage de la première couche, une fois fondu, mouillant le composé métallique de la seconde couche, (b) chauffer l'assemblage jusqu'à la température du liquidus du métal ou de l'alliage de brasage, pour décomposer les liants et faire pénétrer le métal ou l'alliage de brasage fondu dans le composé métallique, et (c) refroidir l'assemblage pour produire sur le substrat un revêtement, rempli de métal ou d'alliage de brasage, du composé métallique résistant à l'usure ou à la corrosion; dans lequel: la seconde couche est remplacée par une pluralité de sous-couches, chacune renfermant une ou plusieurs feuilles coplanaires, chacune de ces feuilles contenant le composé métallique en poudre résistant à l'usure ou à la corrosion dans le liant; les joints définis entre des feuilles adjacentes, dans une sous-couche quelconque, étant décalés des joints définis entre des feuilles adjacentes dans une autre sous-couche quelconque et ne coïncidant pas avec ces dernières.

11. Article composite selon la revendication 10, dans lequel:
l'épaisseur totale des sous-couches est essentiellement égale à l'épaisseur de la seconde couche remplacée.

12. Article composite selon la revendication 10, dans lequel:
le composé métallique résistant à l'usure ou à la corrosion est choisi dans le groupe constitué par le carbure de tungstène, le carbure de titane, le borure de nickel et le carbure de chrome.
